Europäisches Patentamt

European Patent Office

Office européen des brevets

(19)

(11) **EP 1 272 027 B1**

(12) **EUROPÄISCHE PATENTSCHRIFT**

(45) Veröffentlichungstag und Bekanntmachung des Hinweises auf die Patenterteilung:
**24.09.2003 Patentblatt 2003/39**

(21) Anmeldenummer: **00908992.1**

(22) Anmeldetag: **04.02.2000**

(51) Int Cl.7: **A01K 1/00**

(86) Internationale Anmeldenummer:
**PCT/DE00/00355**

(87) Internationale Veröffentlichungsnummer:
**WO 01/056371 (09.08.2001 Gazette 2001/32)**

(54) **HEIZEINRICHTUNG FÜR EINEN STALL UND VERFAHREN ZUM BETREIBEN DER HEIZEINRICHTUNG**

HEATING DEVICE FOR A STALL AND METHOD FOR OPERATING THE SAME

DISPOSITIF DE CHAUFFAGE POUR ETABLE ET PROCEDE D'EXPLOITATION DUDIT DISPOSITIF DE CHAUFFAGE

(84) Benannte Vertragsstaaten:
**AT BE CH CY DE DK ES FI FR GB GR IE IT LI LU MC NL PT SE**

(43) Veröffentlichungstag der Anmeldung:
**08.01.2003 Patentblatt 2003/02**

(73) Patentinhaber: **Blaffert, Eberhard**
**39524 Schönhausen (DE)**

(72) Erfinder: **Blaffert, Eberhard**
**39524 Schönhausen (DE)**

(74) Vertreter: **Leinung, Günter**
**Patentanwalt,**
**Olvenstedter Strasse 15**
**39108 Magdeburg (DE)**

(56) Entgegenhaltungen:
**DE-A- 3 403 930          DE-A- 19 926 859**
**DE-C- 4 443 931          DE-U- 9 203 446**
**DE-U- 29 512 064**

**Beschreibung**

Die Erfindung bezieht sich auf eine Heizeinrichtung für einen Stall nach dem Oberbegriff des Anspruches 1 und ein Verfahren zum Betreiben der Heizeinrichtung, insbesondere für Abferkelbuchten nach dem Oberbegriff des Anspruches 5.

Bei der Aufzucht der jungen, gerade geworfenen, Ferkel sind viele Erfahrungen gewonnen worden in Bezug auf die Bedürfnisse der Ferkel und des Muttertieres. Dabei ist es wichtig, daß die Ferkel ungestört ihre Nahrung beim Muttertier aufnehmen können, ohne daß sie vom Muttertier erdrückt werden. Gleichzeitig ist dafür zu sorgen, daß die Ferkel ausreichend gewärmt werden, da sie einen höheren Wärmebedarf haben als das Muttertier und wegen ihrer fast fehlenden Behaarung auch ständig einen hohen Wärmeverlust erleiden.

So ist allgemein bekannt, einen derartigen Ferkelliegeplatz mit einer Infrarot-Lampe auszurüsten, welche oberhalb des Ferkelliegeplatzes angeordnet ist und eine Heizleistung von ca. 150 bis 200 Watt besitzt und die darunterliegenden Ferkel bestrahlt und erwärmt. Da derartige Einrichtungen nicht den geforderten sicherheitstechnischen Bestimmungen in Aufzuchtanlagen entsprechend, ist deren Anwendung nicht empfehlenswert, und es wurde bereits mit der DE 34 03 930 A 1 ein Schweinekoben für die Ferkelaufzucht vorgestellt, welcher mit einem Sauenstand, in dem das Muttertier fixiert werden kann und mit einem Ferkelliegeplatz ausgerüstet ist, dem eine Wärmequelle zugeordnet ist.

Als Wärmequelle dient ein in den Boden des Ferkelliegeplatzes eingelassenes elektrisches Kabel, dem wenigstens ein Temperaturfühler zugeordnet ist, mit dem die Temperatur an der Oberseite des Ferkelliegeplatzes abtastbar ist und durch einen mit dem Temperaturfühler beaufschlagten Thermostatschalter die Stromstärke des Heizkabels regelbar ist.

Ferner beschreibt diese Lösung, daß oberhalb des Ferkelliegeplatzes eine Dachplatte angebracht ist, die wenigstens den mit dem Heizkabel unterlegten Bereich, von oben gesehen, überdeckt. Seitlich an dieser Dachplatte vorgesehene herabhängende Folienstreifen sollen bewirken, daß die Temperatur im Bereich des Ferkelliegeplatzes aufrecht erhalten bleibt.

In Verbesserung dieser bekannten Lösung wurde mit der DE 44 43 931 C 1 eine weitere Heizplatte für einen Stall, insbesondere für Abferkelbuchten, bekannt, die trapezförmig ausgebildet ist und in einen Rostboden, umfassend eine Vielzahl von Rostelementen, einsetzbar ist, wobei die vorgesehenen Heizplatten im wesentlichen L-förmig ausgebildet und hinsichtlich der Abmessungen der Schenkel den Rostelementen in den Tierställen angepaßt sind.

Ferner wurde ein Ferkelliegeplatz mit der G 92 03 466.7 O 1 bekannt, der mit einer Heizvorrichtung aus einer Vielzahl von vorzugsweisen geraden Heizrohren, die mit geringen Abständen im wesentlichen über die gesamte Länge und Breite einer Platte auf dem Boden des Ferkelliegeplatzes verteilt angeordnet sind.

Diese Heizvorrichtung ist so ausgebildet, daß die einzelnen geraden Heizrohre untereinander verbunden und an einem jeweiligen Vorlaufrohr bzw. Rücklaufrohr für die Durchströmung des Heizmediums angeschlossen sind.

Als Energiequelle dient Warmwasser, welches in analoger Weiser einer Warmwasser-Zentralheizung durch die einzelnen Heizrohre geführt wird.

Die bekannten Lösungen sind so ausgeführt, daß sie nur in den Fußböden der Tierställe angeordnet werden können, was nicht nur den Nachteil in sich birgt, daß keine ausreichende allseitige Wärmung der darauf liegenden Tiere möglich ist, ferner sind diese Einrichtungen mit erheblichen Fertigungs- und Montageaufwendungen verbunden.

Es ist daher Aufgabe der Erfindung, eine Heizeinrichtung für einen Tierstall, insbesondere für Abferkelbuchten und ein Verfahren zum Betreiben der Heizeinrichtung zu entwickeln, die den hygienischen als auch den sicherheitstechnischen Bestimmungen entspricht und so gestaltet ist, daß eine ausreichende Wärme bei vertretbaren Betriebskosten erzeugt werden kann.

Erfindungsgemäß wird die Aufgabe durch die Merkmale der Ansprüche 1 und 5gelöst. Die Unteransprüche geben vorteilhafte Ausgestaltungsmöglichkeiten hierzu an, mit denen sich zusätzliche Vorteile erzielen lassen.

In Erkenntnis dessen, daß bei Fußbodenheizungen die Tiere nur mit einem Drittel ihrer Körperfläche (Liegefläche) Wärmekontakt zu den Heizelementen haben und zwei Drittel ihrer Körperfläche frei der Umgebung ausgesetzt sind, wurde eine Heizeinrichtung für einen Tierstall, insbesondere für Abferkelbuchten, geschaffen, welche höhenverstellbar und klappbar über dem Ferkelliegeplatz, dem Ferkelnest, angeordnet ist und mit einer auf dem Boden des Ferkelnestes aufliegenden Gummi-Isolierplatte in Wirkverbindung steht.

Die geschaffene Heizeinrichtung stellt neben ihrer Funktion als Heizungsquelle gleichzeitig eine Ferkelnestabdeckung dar, da sie oberhalb des Ferkelnestes angeordnet ist.

Die neuartige Heizungsquelle, eine Flächenheizung, zur Erwärmung des Ferkelnestes von oben entspricht dem physikalisch-technischen Grundprinzip des "Schwarzen Strahlers", wobei die Heizeinrichtung mittels warmen Wassers durchströmt und aufgeheizt wird und ihre Wärmeabstrahlung als Infrarotstrahlung zur Erwärmung der darunter liegenden Ferkel bzw. des gesamten Ferkelnestes dient.

Die Liegefläche des Ferkeinestes ist mit einer schwarzen Gummi-Isolierplatte ausgelegt und verhindert Liege-Wärme-Verluste zum darunter befindlichen Spaltenboden und dem Güllebereich.

Ist das Ferkelnest infolge des Säugevorganges nicht belegt, wird das Ferkelnest, speziell die schwarze Gummi-Isolierplatte, durch die Infrarotstahlung erwärmt, so daß die Tiere ständig ein warmes Ferkelnest vorfinden. Die verwendeten Gummi-Isolierplatten begründen fernerhin den Vorteil, daß die Verletzungshäufigkeit der Jungtiere wesentlich geringer ist gegenüber bekannten metallischen Auflagerungen.

Mit der vorgestellten Heizeinrichtung wird die erforderliche Nestwärme bereits bei Temperaturen des Heizmediums ab 55° C erreicht und kann durch ein vorgesehenes Verfahrensregime abteilweise über eine Klimakurve durch die gesamte Säugezeit gleitend geregelt werden.

Die Heizeinrichtung selbst ist als flächenhaftes Strahlungselement ausgestaltet, welches mit einem vorzugsweise kreisrunden Medienzuführungs- und Medienrückführungsrohr ausgebildet ist. Die Strahlungsseite des Strahlungselementes ist mit einer besonderen Oberfläche ausgebildet. Diese wird durch Anodisierung auf der Strahlungsfläche aufgebracht und besitzt eine Schichtdicke von 12 μmm. Vorzugsweise ist diese anodisierte Oberfläche in einer schwarzen Farbgestaltung ausgeführt, wodurch die Wirksamkeit der Strahlungsfläche noch erhöht wird und gleichfalls eine Oberflächenbeschichtung des Strahlungselementes gegeben ist, die extremen Belastungen standhält.

Auf der oberen Fläche des Strahlungselementes, der dem Ferkelnest abgewandten Fläche, ist eine Isolierschicht vorgesehen, so daß Wärmeverluste ausgeschlossen und eine effektive Abstrahlung gewährleistet ist.

Es gehört auch zur Erfindung, daß infolge der Ausbildung und Gestaltung der einzelnen Strahlungselemente diese hintereinander angeordnet werden können, indem die jeweiligen Medienzuführungsrohre und die jeweiligen Medienrückführungsrohre miteinander verbunden werden, wodurch das Gegenstromprinzip realisiert wird, was so wirksam wird, daß über die aneinandergereihten Strahlungselemente eine gleichmäßige Wärmeabstrahlung erfolgt, was halt durch das Gegenstromprinzip realisiert wird.

Durch diese Möglichkeit der Aneinanderreihung bzw. Schaltung der einzelnen Strahlungselemente ergibt sich ein weiterer Vorteil, daß nämlich derartige Strahlungselemente auch als Heizeinrichtungen in den nachfolgenden Ställen, den Flatdeckabteilen, genutzt werden können.

Mit Flatdeckabteils werden die Bereiche bezeichnet, in denen die Ferkel nach einer bestimmten Aufzuchtzeit, wenn sie von dem Muttertier getrennt werden, verbracht werden.

Durch die Anordnung und Verwendung der Strahlungselemente wird erreicht, daß in einer Höhenanordnung von 70 cm, über dem Abbuchtboden, bei Vorlauftemperaturen in den Strahlungselementen wirksame Temperaturen von etwa 27 ° erzielt werden, die für Ferkel dieser Altersgruppe notwendig und auch ausreichend sind.

Mit nachfolgendem Ausführungsbeispiel soll die Erfindung näher erläutert werden.

Die dazugehörige Zeichnung zeigt in

Figur 1: das Funktionsprinzip der Heizeinrichtung

Figur 2: eine Ausführungsvariante des flächenhaften Strahlungselementes

Figur 3: ein Schaltschema zur Durchführung des Verfahrens zur Klimatisierung

Figur 4: ein Verlaufsschema der Vorlauftemperatur

Figur 5: das Ein- bzw. Ausschaltverhalten des Bypassmischventils.

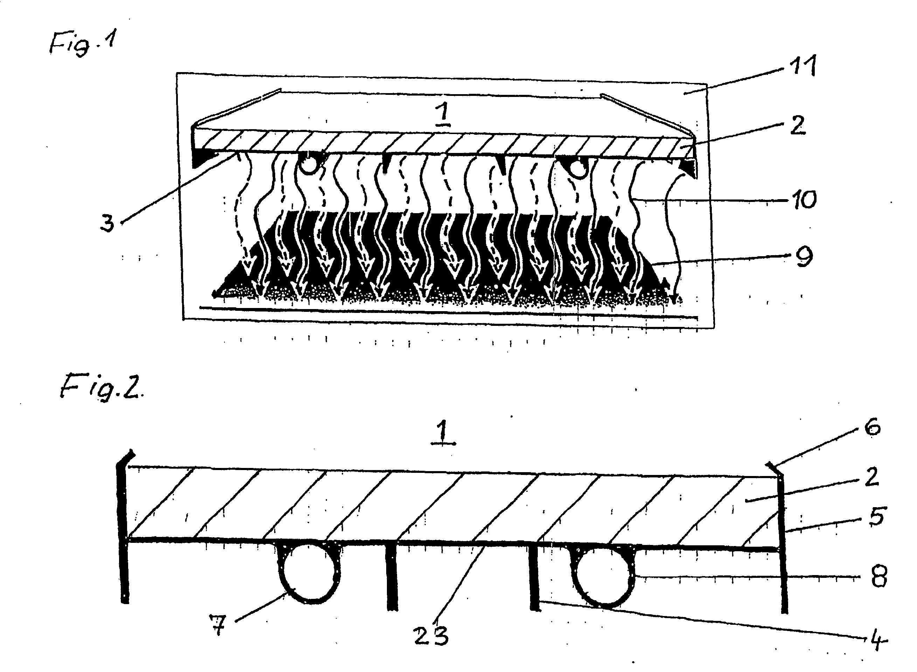

Die Ausbildung und Anordnung der entwickelten Heizeinrichtung ergibt sich aus der prinziphaften Darstellung gemäß Figur 1.

Diese gibt in ihrer Darstellung unmittelbar wieder, wie die Heizeinrichtung, bestehend aus dem Strahlungselement 1, mit der auf dem Fußboden eines Tierstalles aufliegenden Gummüsolierplatte 9 in Wirkzusammenhang steht. Zum Verständnis ist in der Figur 1 der Tierstall mit der Bezugszahl 11 gekennzeichnet.

Das Strahlungselement 1 ist dabei in einem bevorzugten Abstand von ca. 50 cm über der Gummiisolierplatte 9 angeordnet, wobei ihre Strahlungsseite 3 unmittelbar auf die Oberfläche der Gummiisolierplatte 9 gerichtet ist.

Die von dem Strahlungselement abgegebene Wärmestrahlung ist eine Infrarotstrahlung, die als Wärmestrahlen mit der Bezugszahl 10 gekennzeichnet sind.

Die Ausbildung eines Strahlungselementes 1 wird insbesondere verdeutlicht nach der Darstellung gemäß Figur 2, wobei die Ausbildung des Strahlungselementes 1 nicht nur auf die dargestellte Form beschränkt ist.

Die gewählte Ausbildung des Strahlungselementes 1 verdeutlicht, daß das Strahlungselement 1 ein flächenhaftes Element ist, welches aus einer hochwärmeleitfähigen Aluminium-Warmwasser-Strahlungsplatte 23 besteht, welche an ihren äußeren Seiten Seitenbegrenzungen 5 aufweist, die sowohl nach unten als auch nach oben ausgebildet sind und im oberen Bereich in eine Abwinkelung 6 übergehen.

Oberhalb der Strahlungsplatte 23 ist das Strahlungselement 1 mit einer Isolierschicht 2 ausgebildet, die aus einer Feuchtraum-Styrodur-Isolierschicht besteht und mit einer Dicke von 25 mm ausgebildet ist. Diese Isolierschicht 2 liegt auf der Oberfläche des Strahlungselementes 1 auf und wird durch die Seitenbegrenzungen 5 und die Abwinkelungen 6 positioniert und gleichzeitig arretiert. Unterhalb der Strahlungsplatte 23 des Strahlungselementes 1 besitzt diese eine Strahlungsseite 3, welche mit einer schwarzen Beschichtung versehen ist.

Ferner ist jedes Strahlungselement 1 mit einem Heizungsvorlauf 7 und einem Heizungsrücklauf 8 ausgeführt, durch die das Heizmedium, Warmwasser, geführt wird.

Die auf der Strahlungsseite 3 der Strahlungsplatte 23 vorgesehenen Stege 4 dienen der Stabilisierung des gesamten Strahlungselementes 1.

Das Strahlungselement 1 selbst wird nach dem Strangpreßverfahren hergestellt und stellt im weitesten Sinne ein Strahlungsprofilrohr dar, wobei seine Ausbildung und sein Herstellungsverfahren einmal eine kostengünstige Herstellung sichert und gleichfalls die Möglichkeit gegeben ist, Strahlungselemente 1 unterschiedlicher Längen herzustellen.

Die Heizungsvorläufe 7 und Heizungsrückläufe 8 eines jeden Strahlungselementes 1 sind jeweils mit einer schwenkbaren und biegsamen Verbindung an die entsprechenden wasserzu- und -abführenden Rohre angeschlossen, und durch die biegsame Ausbildung der Verbindung ist es möglich, daß die einzelnen Strahlungselemente 1 je nach Bedarf nach oben geklappt werden können, somit genügend Freiraum oberhalb des Ferkelnestes gegeben ist, um Reinigungs- und Wartungsarbeiten durchführen zu können.

Im Absetz- oder Flatdeckbereich, dem Aufzuchtbereich, der dem Ferkelnestbereich folgt, können derartige Strahlungselemente 1 gleichfalls als Heizeinrichtungen verwendet werden, wodurch infolge ihrer Gestaltung es möglich ist, das Gegenstromprinzip zu realisieren. Dies bedeutet, daß die Strahlungselemente 1 selbst den Vor- und Rücklauf bilden, wodurch sich eine gleichmäßige Temperaturverteilung ergibt, so daß unter dem ersten Strahlungselement 1 und dem in Reihe dazugeschalteten letzten Strahlungselement 1 gleiche Temperaturbedingungen vorherrschen.

Die Verbindung der Strahlungselemente 1 untereinander erfolgt in der Form, daß die Heizungsvorläufe 7 in gerader, in axialer, Richtung untereinander und die Heizungsnickläufe über bewegliche Rohrverbindungen verbunden werden. Die beweglichen Rohrverbindungen werden dabei so zwischen den einzelnen Strahlungselementen 1 geführt und verlegt, daß sie jeweils in einer Bogenführung zum Heizungsvorlauf 7 ausgebildet sind, was sich positiv auf ein Abklappen, ein Anheben, der einzelnen Strahlungselemente 1 auswirkt. Um dieses Hochklappen problemlos realisieren zu können, werden die einzelnen Strahlungselemente 1 im Bereich ihrer Heizungsvorläufe arretiert.

Das Verfahren zur Steuerung und Regelung der Heizeinrichtung ist gekennzeichnet durch die Einstellung der gewünschten Temperatur im Ferkelnestbereich, was in Abhängigkeit über die vorherrschende, veränderbare Stalltemperatur und der Temperatur im Warmwasservorlauf erfolgt. Dabei ist das Verfahrensregime so gestaltet, daß die erforderliche Nestwärme abteilweise über eine Klimakurve durch die gesamte Säugezeit der aufzuziehenden Ferkel gleitend geregelt werden kann.

Dabei spielt die neue Heizeinrichtung in Form des Strahlungselementes 1 eine wesentliche Rolle, da durch die Ausbildung des Strahlungselementes 1 bereits erforderliche Nestwärmetemperaturen bei Heiztemperaturen ab 55° C erreicht werden. Ein weiterer wesentlicher Vorteil liegt darin, daß mit diesem Strahlungselement 1 in der Absetzphase der Ferkel schon Liegetemperaturen von 25° C erreicht werden, dies bei einer Temperatur des Strahlungselementes 1 von nur 30° C. Dies wird auch dadurch unterstützt, daß die Strahlungswärme des Strahlungselementes 1 nicht weggelüftet wird, sondern unmittelbar durch seine direkte Anordnung über dem Ferkelnest auf das Ferkelnest wirkt. Dadurch ist es möglich, die Stalltemperatur entsprechend niedrig auszulegen, was zu Energieeinsparungen von etwa 30 % führt.

Ferner haben Untersuchungen ergeben, daß mit den Strahlungselementen 1 ausgerüstete Ferkelnester an unterschiedlichen Stellen auf der Oberfläche der Gummiisolierplatte 9 Temperaturunterschiede von nur 0,8° C bestehen, somit eine fast 100 %ig gleichmäßige Ferkelnestwärme anliegt.

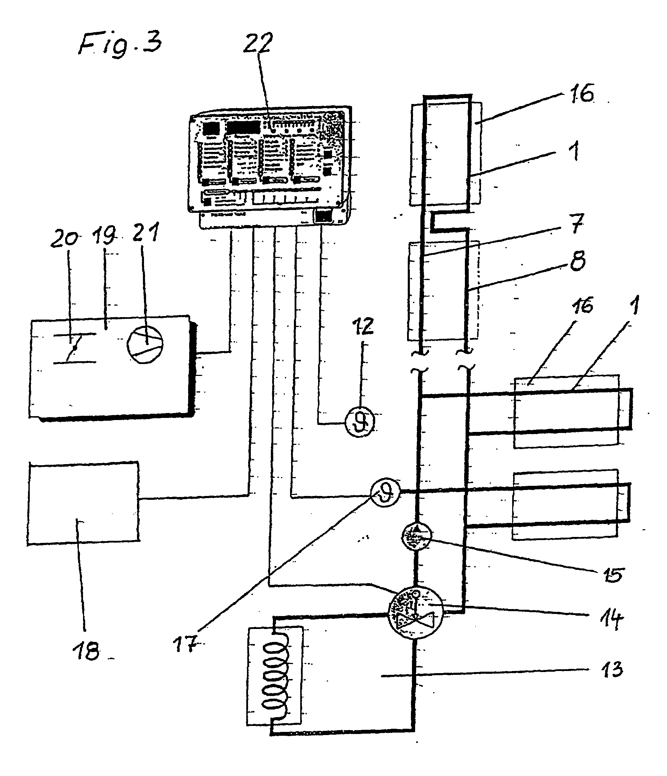

Die Steuerung der Beheizung von Ferkelüestern erfolgt über eine Anlage, wie sie in der Figur 3 gezeigt ist und stellt eine Regel- und Steuereinrichtung zur Tierstall- und Ferkelnest-Klimatisierung dar.

Wie aus dem Schaltschema nach Figur 3 ersichtlich, werden sämtliche Informationen. einem Computer 22 zugeführt, in dem die entsprechenden Abgleichungen erfolgen und Steuerbefehle auf die einzelnen Elemente gegeben werden.

Die gewünschte Temperatur in den einzelnen Ferkelnestern 16 ist in der Figur 3 jeweils mit dem Parameter FN angegeben, sie ist die Solltemperatur, die vom Betreiber als regelnde Ausgangsgröße eingegeben wird. Die Tierstalltemperatur wird über den Temperaturfühler 12 ermittelt und weitergeleitet, gleichfalls wird die Temperatur im Heizungsvorlauf 7 über ein entsprechendes Meßgerät 17 erfaßt und dem Computer 22 zugeführt. Der Heizungsrücklauf 8, verbunden über einzelne Absperrventile zu den Heizungsrückläufen im Bereich der Ferkelnester 16, ist über ein Bypass-Mischventil 14 mit dem Heißwasserkreislauf 13 verbunden. Nach erfolgter Aufheizung des Wassers wird in regelnder Weise über das Bypass-Mischventil 14 und die Pumpe 15 der Heizungsvorlauf 7 mit erhitztem Wasser versorgt, die Verbindung zum Computer 22 ist über eine Steuerleitung zwischen Bypass-Mischventil 14 und dem Computer 22 gegeben. Zur gesamten Klimatisierungsanlage gehören ferner eine Tierstall-Klimaregelung 19, die mit einer Klappe 20 und einem Lüfter 21 ausgerüstet ist und gleichfalls eine akustische Wächterfunktion 18 besitzt, so daß neben der optischen Anzeige der Betriebszustände auf dem Display des Computers 22 zusätzliche akustische Signale Informationen zum Betriebsgeschehen geben können bzw. auf bestimmte Betriebszustände hinweisen.

Aus der Solltemperaturvorgabe, abgeleitet aus den gewünschten Solltemperaturen in den Ferkelnestern 16, wird die Temperatur des Heizungsvorlaufes 7 ermittelt, gleichfalls findet die vorherrschende Temperatur im Tierstall 11 Berücksichtigung, indem sie mit in die Bewertung einfließt.

Die notwendige im Temperatur im Heizungsvorlauf 7, von der die Temperaturen in den Ferkelnestern 16 abhängen, wird nach der Bedingung $VL_R$ = 2,9 FN - 1,9 ST bestimmt, in der bedeuten:

FN = Temperatur im Ferkelnest
ST = Stalltemperatur
$VL_R$ = Vorlauftemperatur.

Der Regelmechanismus läuft nun wie folgt ab: Der Computer 22 mißt die Vorlauftemperatur VL und zeigt den aktuellen Meßwert unter bestimmten Parametern auf dem Display an. Ist der gemessene Wert der Vorlauftemperatur kleiner als die erforderliche Vorlauftemperatur, schaltet der Computer 22 ein Relais, welches das Bypass-Mischventil 14 öffnet. Steigt die Vorlauftemperatur auf einen Wert über dem Sollwert an, fällt das Relais wieder ab, und das Bypass-Mischventil 14 wird geschlossen.

Parallel zu dem Relaisausgang verfügt der Computer 22 über einen analogen Ausgang, dessen Ausgangsspannung von 0 % bis 100 % innerhalb des Regelbereiches der Ferkelnesttemperatur ansteigt, wenn die Vorlauftemperatur unter die errechnete Sollvorlauftemperatur abfällt. Je nach Einstellung der Gnmdeinstellungskenngröße steigt die Steuerspannung analog am Ausgang von 0 bis 10 V an oder fällt umgekehrt von 10 bis 0 V ab. Der minimale analoge Ausgangswert $Stell_{min.}$ läßt sich zwischen 0 % bis 50 % und der maximale Wert $Stell_{max.}$ zwischen 50 % und 100 % einstellen. Unterschreitet die gemessene Voriauftemperatur VL die Solltemperatur $VL_{Soll,}$ springt der analoge Ausgangswert von 0 % auf den eingestellten minimalen Ausgangswert $Stell_{min.}$ Steigt die Vorlauftemperatur auf Werte $VL_{Soll}$ an, bleibt die Vorlauftemperatur konstant auf dem Wert $Stell_{min.}$ Erst bei einem Temperaturanstieg über den Wert $FN_{Soll}$ + $\Delta$ FN = $VL_R$ + VL-Hysterese, springt die Ausgangsspannung wieder auf 0 % zurück.

Die berücksichtigte Nesttemperatur wird dabei nicht direkt gemessen, sondern aus der gemessenen Vorlauftemperatur nach folgender Beziehung abgeleitet:

$$FN_V = ST + {}^{(VL-ST)}/_{2,9}$$

Dabei bedeuten

$FN_V$ = Ferkelnest - Temperatur (errechnet aus VL)
ST = Stalltemperatur
VL = Vorlauftemperatur (gemessen)

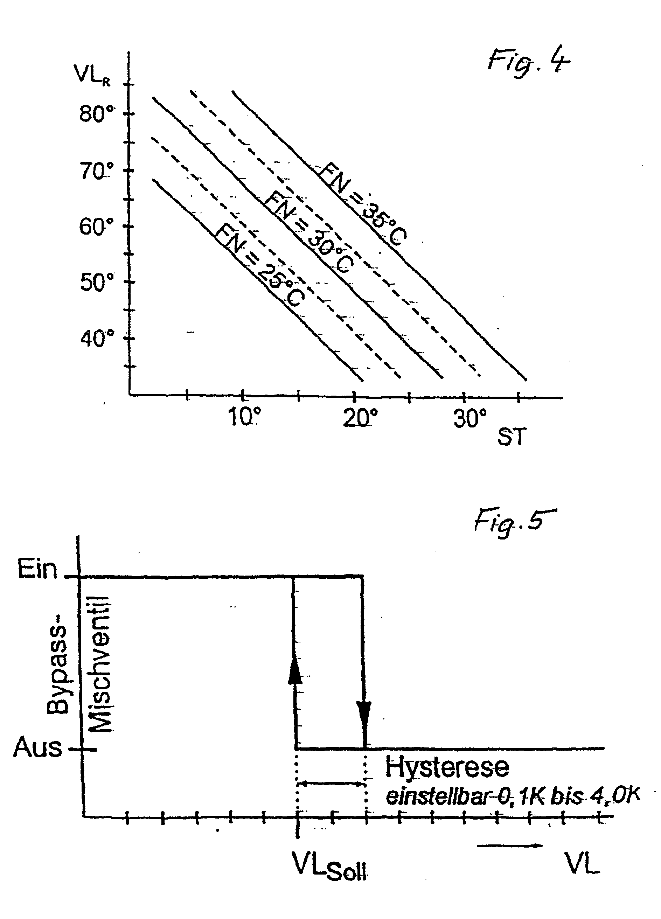

Die in den Figuren 4 und 5 gezeigten Diagramme verdeutlichen die Abhängigkeit der Vorlauftemperatur VL von der Stalltemperatur ST bei unterschiedlichen Ferkelnesttemperäturen FN - Figur 4 -. Die Figur 5 verdeutlicht das Ein-Aus-Schaltverhalten des Bypass-Mischventils 14.

## Patentansprüche

1. Heizeinrichtung für einen Tierstall, insbesondere für Abferkelbuchten, die im Bereich der Ferkelnester und oberhalb des Liegeplatzes der Ferkelnester höhenVerstellbar im Tierstall befestigt ist, wobei der Ferkelnestbereich mit einer Liegematte ausgestattet ist und als Heizmedium Warmwasser verwendet wird, **dadurch gekennzeichnet, daß** die Heizeinrichtung aus einem oder mehreren miteinander verbindbaren Strahlungselementen (1) besteht, das Strahlungselement (1) als ein flächenhaftes Element in Form einer Strahlungsplatte (23) mit einer Strahlungsseite (3), auf der je ein Heizungsvorlauf (7) und ein Heizungsrücklauf (8) vorgesehen sind, angeordnet ist, die Rückseite der Strahlungsseite (3) mit einer Isolierschicht (2) bestückt ist und das/die Strahlungselemente (1) mit einer bestimmten Höhe über dem Ferkelnest klappbar angeordnet sind.

2. Heizeinrichtung nach Anspruch 1, **dadurch gekennzeichnet, daß** die Strahlungselemente (1) mit Seitenbegrenzungen (5), die jeweilige Strahlungsplatte (23) nach oben und unten überragend, ausgebildet sind, wobei die Strahlungsseiten (3) der Strahlungsplatten (23) mit einer schwarzanodisierten Oberflächenbeschichtung ausgeführt sind, deren Schichtdicke ca. 12 µmm beträgt.

3. Heizeinrichtung nach einem der Ansprüchen 1 bis 2, **dadurch gekennzeichnet, daß** die nach oben ausgerichteten Seitenbegrenzungen (5) mit nach innen gerichteten Abwickelungen (6) ausgebildet und auf den Strahlungsseiten (3) Stege (4) angeordnet sind.

4. Heizeinrichtung nach einem der Ansprüche 1 bis 3, **dadurch gekennzeichnet, daß** die einzelnen Strahlungselemente (1) über ihre Heizungsvorläufe (7) und Heizungsrückläufe (8) zueinander gefügt und zu einen flächendeckenden Heizeinrichtung ausgebildet werden, wobei eine der Verbindungsstellen drehbeweglich und klappbar als eine Rohrverbindung und die zweite als eine flexible Verbindung, eine Schlauchverbindung, ausgebildet sind.

5. Heizeinrichtung nach einem der Ansprüche 1 bis 4, **dadurch gekennzeichnet, daß** die Heizeinrichtung nach dem Gegenstromprinzip arbeitet, die Wärmeabstrahlung von den Strahlungselementen (1) als Infrarotstrahlung wirkt und eine gleichmäßige Wärmeverteilung über die andeinandergefügten Strahlungselemente (1) erzielt wird.

**6.** Verfahren zum Betreiben der Heizeinrichtung nach Anspruch 1, **dadurch gekennzeichnet, daß** aus der geforderten Ferkelnesttemperatur FN, der Endtemperatur, unter Berücksichtigung der Stalltemperatur ST, die Vorlauftemperatur $VL_R$ des Heizmediums, im Heizungsvorlauf (7) abgeleitet wird und die Bedingung $VL_R = 2{,}9 \cdot FN - 1{,}9\ ST$ gilt.

**7.** Verfahren nach Anspruch 6, **dadurch gekennzeichnet, daß** die Ferkelnesttemperatur FN unter Berücksichtigung von Temperaturschwankungen aus der gemessenen Vorlauftemperatur des Heizmediums nach der Beziehung $FN_V = ST + {}^{(VL\text{-}ST)}/_{2{,}9}$ abgeleitet wird.

**8.** Schaltungsanordnung zur Durchführung des Verfahrens nach den Ansprüchen 6 und 7, **dadurch gekennzeichnet, dass** der Heizungsvorlauf (7) und der Heizungsrücklauf (8) über ein Bypass-Mischventil (14) an einem Heizwasserkreislauf (13) angeschlossen sind und jeweils mit den Heizeinrichtungen der einzelnen Ferkelnester (16) in Verbindung stehen, das Bypass-Mischventil (14) über eine Steuerleitung mit dem Computer (22) geschaltet ist, die Vorlauftemperatur des Heizmediums über ein Messelement (17), die Stalltemperatur über einen Temperaturfühler (12) erfasst und dem Computer (22) zugeleitet werden, wobei der Computer (22) gleichfalls über Steuerleitungen mit einer Tierstallklimatisierung (19) und einer akustischen Überwachung (18) verbunden ist.

**Claims**

**1.** Heating system for an animal stable, especially for piglet birthing bays, which in the area of the piglet nests and above the resting place of the piglet nets is mounted for vertical movement within the animal stable with the piglet nest area being provided with a resting mat and warm water being used as the heating medium, **characterized by** the fact that the heating system consists of one or more radiation elements (1) which may be connected to each other, that the radiation element (1) is provided as a surface element structured as a radiation plate (23) with a radiation side (3), upon which there is provided a heat input pipe (7) and a heat output pipe (8), that the reverse of the radiation side (3) is provided with an insulating layer (2) and that the radiation element(s) (1) is/are foldably arranged at a predetermined level above the piglet nests.

**2.** Heating system according to claim 1, **characterized by** the fact that the radiation elements (1) are structured with lateral restrictions (5) extending beyond the respective radiation plate (23) in an upward and downward direction, with the radiation sides (3) of the radiation plates (23) being provided with a black anodised surface coating of a layer thickness of about 12 μmm.

**3.** Heating system according to one of claims 1 to 2, **characterized by** the fact that the upwardly directed lateral restrictions (5) are structured with inwardly directed unwinding devices (6) and that ribs (4) are provided on the radiation sides (3).

**4.** Heating system according to one of claims 1 to 3, **characterized by** the fact that the individual radiation elements (1) are connected to each other as a surface-covering heating system (8) by way of heat input pipes (7) and heat output pipes (8), with one of the connections being rotationally movable and foldable as a pipe connection and the second connection being a flexible hose connection.

**5.** Heating system according to one of claims 1 to 4, **characterized by** the fact that the heating system operates on the counterflow principle, that the heat emission of the radiation elements (1) acts as infrared radiation and that a uniform distribution of heat is achieved over the adjacent radiation elements (1).

**6.** Procedure for the operation of the heating system according to claim 1, **characterized by** the fact that the input temperature $VL_R$ of the heating medium in the heat input pipe (7) is derived from the required piglet nest temperature FN , the end temperature, in consideration of the stable temperature ST, and that the equation $VL_R = 2{,}9\ FN - 1{,}9\ ST$ is applicable.

**7.** Procedure according to claim 6, **characterized by** the fact that in consideration of temperature deviations the piglet nest temperature FN is derived from the measured input temperature of the heating medium on the basis of the equation

$$FN_v = ST + \frac{(VL - ST)}{2{,}9}$$

**8.** Circuit arrangement for the implementation of the procedure according to the claims 6 and 7, **characterized by** the fact that the heat input pipe (7) and the heat output pipe (8) are connected to a warm water circuit (13) by a bypass mixing valve (14) and are connected to the respective heat systems of the individual piglet nests (16), the bypass mixing valve (14) being actuated over a control line by the computer (22), the input temperature of the heating medium being measured by a measuring element (17) and the stable temperature being recorded by a temperature sensor (12) and fed to the computer (22), with the computer (22) being also connected by control lines with an animal stable climate control (19) and an acoustic monitoring device (18).

## Revendications

1. Installation de chauffage destinée à une étable, en particulier à des cases de mise-bas, qui est fixée de manière réglable en hauteur dans l'étable au niveau des nids des porcelets et au-dessus de la couchette des nids des porcelets, la zone du nid des porcelets étant équipée d'un tapis de couchage, et utilisant de l'eau comme agent de chauffage, **caractérisée en ce que**
   l'installation de chauffage est constituée d'un ou plusieurs éléments radiants (1) pouvant être reliés les uns avec les autres, l'élément radiant (1) est disposé comme élément de surface sous la forme d'un panneau radiant (23) avec un côté radiant (3), sur lequel respectivement une entrée de chauffage (7) et un retour de chauffage (8) sont prévus, l'arrière du côté radiant (3) est pourvu d'une couche isolante (2), et que l'élément radiant/les éléments radiants (1) est/sont disposé/s avec une hauteur déterminée de manière pliable au-dessus du nid des porcelets.

2. Installation de chauffage selon la revendication 1, **caractérisée en ce que**
   les éléments radiants (1) sont exécutés avec des bords latéraux (5) saillant vers le haut et le bas par rapport au panneau radiant (23) correspondant, les côtés radiants (3) des panneaux radiants (23) étant pourvus d'une couche de finition anodisée noire d'une épaisseur d'env. 12 $\mu$mm.

3. Installation de chauffage selon une des revendications 1 à 2, **caractérisée en ce que**
   les bords latéraux (5) orientés vers le haut sont réalisés avec des dispositifs de déroulement (6) orientés vers l'intérieur et que des listons (4) sont disposés sur les côtés radiants.

4. Installation de chauffage selon un des revendications 1 à 3, **caractérisée en ce que**
   les divers éléments radiants (1) sont assemblés les uns aux autres par leurs entrées de chauffage (7) et retours de chauffage (8) et sont réalisés de manière à constituer une installation de chauffage couvrant l'ensemble de la surface, un des points de raccordement étant réalisé de façon rotative et pliable en tant que raccord de tube, et le deuxième point étant réalisé en tant que raccord flexible, raccord de tuyau flexible.

5. Installation de chauffage selon une des revendications 1 à 4, **caractérisée en ce que**
   l'installation de chauffage fonctionne selon le principe de contre-courant, la radiation de chaleur à partir des éléments radiants (1) agit comme rayonnement infrarouge, et qu'une répartition uniforme est obtenue par les éléments radiants (1) assemblés.

6. Procédé pour exploiter l'installation de chauffage selon la revendication 1, **caractérisé en ce que**
   de la température exigée pour le nid des porcelets FN, de la température terminale, en tenant compte de la température dans l'étable ST, est déduite la température d'entrée VL$_R$ de l'agent de chauffage dans l'entrée de chauffage (7), et que la condition VL$_R$ = 2,9 FN - 1,9 ST s'applique.

7. Procédé selon la revendication 6, **caractérisée en ce que**
   la température du nid des porcelets FN est déduite, en tenant compte des variations de température, de la température d'entrée mesurée de l'agent de chauffage selon l'équation

$$FN_V = ST + \frac{(VL - ST)}{2,9}.$$

8. Disposition de circuit pour réaliser le procédé selon les revendications 6 et 7, **caractérisés en ce que**
   l'entrée de chauffage (7) et le retour de chauffage (8) sont branchés, par le biais d'un robinet mélangeur de dérivation (14), à un circuit d'eau de chauffage (13) et sont à chaque fois en relation avec les installations de chauffage des divers nids des porcelets (16), le robinet mélangeur de dérivation (14) est connecté, par le biais d'une conduite de commande, à l'ordinateur (22), la température d'entrée de l'agent de chauffage est saisie au moyen d'un élément de mesure (17), et la température dans l'étable est saisie au moyen d'un capteur de température (12), et les deux sont amenées à l'ordinateur (22), l'ordinateur (22) lui-même étant relié, également par le biais des conduites de commande, à une climatisation d'étables (19) et une surveillance acoustique (18).

Fig. 1

11

1

2

3

10

9

Fig. 2

1

6

2

5

7

23

8

4

EP 1 272 027 B1

Fig.3

Fig. 4

Fig. 5